# DEMANDE DE BREVET EUROPEEN

(11) **EP 1 798 114 A1**
(43) Date de publication de la demande: **20.06.2007**
(21) Numéro de dépôt: 06291957.6
(22) Date de dépôt: 15.12.2006
(51) Int. Cl.: B60R 19/48, B60R 21/34, B60R 21/0136

(54) **Pièce d'adaptation destinée à être placée sur un véhicule automobile, absorbeur de chocs, bloc avant de véhicule automobile et véhicule automobile**

(30) Priorité: 16.12.2005 FR 0512848
(71) Demandeur: Compagnie Plastic Omnium, 69007 Lyon (FR)
(72) Inventeur: Rocheblave, Laurent, 69100 Villeurbanne (FR)
(74) Mandataire: Remy, Vincent Noel Paul

(57) **Abrégé**

La présente invention concerne une pièce d'adaptation (3, 3') destinée à être placée sur un véhicule automobile en étant positionnée sur un canal de transmission d'efforts allant d'une peau de carrosserie à un appui rigide structurel, en passant par un capteur longitudinal (9) s'étendant sensiblement parallèlement à ladite peau de carrosserie, ce capteur (9) étant sensible à des efforts transmis dans le canal de transmission d'efforts. La pièce d'adaptation (3, 3') possède une raideur variable selon la direction longitudinale du capteur (9), de manière à transmettre audit capteur (9), lorsque le véhicule subit un impact, une force de compression qui tend à être indépendante de la position de l'impact par rapport à la direction longitudinale du capteur (9).

## Description

La présente invention concerne une pièce d'adaptation destinée à être placée sur un véhicule automobile, un absorbeur de chocs muni d'une telle pièce, un bloc avant muni d'une telle pièce et un véhicule automobile comprenant un tel bloc avant.

Il est connu d'équiper les systèmes d'absorption des véhicules automobiles de capteurs qui ont pour fonction de mesurer l'intensité des chocs, dans le but de déterminer la nature des objets impactés.

Ainsi, on peut en particulier identifier un piéton à l'aide de ces capteurs, de façon à déclencher un dispositif de protection, tel qu'un mécanisme de levage de capot ou un airbag externe.

La reconnaissance des objets impactés résulte d'une analyse de l'information fournie par le capteur et d'autres informations fournies par le reste du véhicule, en particulier sa vitesse de déplacement.

La détection de chocs par capteurs s'applique aussi à des chocs à haute vitesse. Dans ce cas, il s'agit de préserver certains équipements onéreux du véhicule en les déplaçant au début du choc dans une zone du véhicule où ils seront moins facilement détériorés.

Dans toutes ces applications, on comprend qu'il est important que la reconnaissance de l'objet impacté se fasse le plus tôt possible au cours du choc, car les dispositifs activés en réaction à ce choc doivent opérer en début d'impact, faute de quoi ils perdraient toute utilité.

Dans l'état de la technique, on réalise la détection d'objets impactés à l'aide d'un capteur de compression que l'on fixe sur un absorbeur de chocs. Le capteur est conçu de façon spécifique, de manière à réagir aux sollicitations subies par l'absorbeur lors de chocs du véhicule.

Une difficulté réside dans le fait que l'avant du véhicule n'a pas la même raideur en tout point de sa largeur. En effet, on distingue des zone dites " sensibles", dans lesquelles le capteur est soumis quasi-directement aux efforts que subit l'avant du véhicule, et des zones dites "peu sensibles", dans lesquelles le capteur ne "mesure" qu'une faible portion de l'effort subi par l'avant du véhicule.

Les zones sensibles sont celles dans lesquelles l'environnement du capteur, c'est-à-dire les pièces qui se trouvent entre la peau du pare-chocs et les longerons, en amont et en aval du capteur, transmettent les efforts sans les absorber. Au contraire, les zones peu sensibles sont celles dans lesquelles des pièces environnantes absorbent une part importante de l'énergie du choc. C'est le cas par exemple du voisinage des blocs optiques.

En raison des zones peu sensibles, il peut arriver que le capteur ne signale pas un choc contre un piéton alors que les dispositifs de protection devraient être déclenchés.

C'est ainsi que l'on a dû mettre au point des capteurs de compression à deux seuils de déclenchement, c'est à dire capables d'envoyer un premier signal en cas de dépassement d'un premier seuil, et un second signal en cas de dépassement d'un second seuil, de manière à fournir un signal de détection même pour une faible énergie d'impact, que cet impact ait lieu en une zone peu sensible de l'avant du véhicule, comme par exemple au voisinage des blocs optiques, ou en une zone sensible, comme par exemple dans sa partie centrale. Compte-tenu de l'écart relativement important de raideur entre zones sensibles et peu sensibles, les deux seuils du capteur peuvent être assez éloignés l'un de l'autre.

Cependant, un capteur à deux seuils convenablement adapté à un avant de véhicule bien défini peut fournir une information industriellement exploitable, à condition d'être combiné à un dispositif électronique qui se charge de discriminer les chocs en fonction des signaux fournis par le capteur.

Cette solution pose un problème pratique lors du développement d'un nouveau véhicule automobile. En effet, au cours du développement d'un nouveau véhicule, la conception de l'absorbeur de chocs n'est pas figée mais évolue, au contraire, jusqu'à un stade relativement avancé du développement, notamment en fonction de la forme de la peau du pare-chocs, laquelle n'est souvent arrêtée que très tardivement.

Or, toute évolution de la géométrie de l'absorbeur implique que le capteur de compression soit réadapté en conséquence.

La mise au point du bloc avant d'un véhicule peut donc se trouver retardée par la nécessité de revoir la conception du capteur de compression.

La présente invention vise à proposer une solution évitant cette réadaptation tardive du capteur de compression.

La présente invention a pour objet une pièce d'adaptation destinée à être placée sur un véhicule automobile en étant positionnée sur un canal de transmission d'efforts allant d'une peau de carrosserie à un appui rigide structurel, en passant par un capteur longitudinal s'étendant sensiblement parallèment à ladite peau de carrosserie, ce capteur étant sensible à des efforts transmis dans le canal de transmission d'efforts, ladite pièce d'adaptation étant caractérisée en ce qu'elle possède une raideur variable selon la direction longitudinale du capteur, de manière à transmettre audit capteur, lorsque le véhicule subit un impact, une force de compression qui tend à être indépendante de la position de l'impact par rapport à la direction longitudinale du capteur.

On entend par une force de compression *qui tend à être* indépendante une force de compression qui *est sensiblement* indépendante de la position de l'impact.

De manière idéale, le capteur que l'on place dans le canal de transmission d'efforts, en combinaison avec la pièce d'adaptation, a la même sensibilité sur toute sa longueur et la mise au point, même tardive, de l'absorbeur pour l'adapter à une nouvelle géométrie de peau de pare-chocs ne requiert aucune réadaptation du capteur.

De façon plus pragmatique, le capteur peut demeurer, grâce à la pièce d'adaptation selon l'invention, dans une gamme de sensibilité de 20 %, de préférence de 10 %.

Un avantage supplémentaire de l'invention est que le même capteur peut être utilisé pour différentes versions de véhicules et même pour différents modèles de véhicules.

Plusieurs modes de réalisation de la pièce d'adaptation selon l'invention sont possibles.

C'est ainsi qu'elle peut être réalisée en une mousse ayant une densité variable selon la direction longitudinale du capteur. Un autre ajustement possible consiste à réaliser des évidements dans la mousse de la pièce d'adaptation.

Elle peut aussi être réalisée en matière thermoplastique injectée, avec des variations d'épaisseur et/ou un nombre et/ou des formes de nervures variables. On peut également prévoir des évidements dans ces nervures.

Selon une autre caractéristique particulière de l'invention, la pièce d'adaptation est agencée de manière à transmettre une force limitée au capteur, de manière à préserver celui-ci d'un risque de détérioration en cas de choc trop important.

Dans un mode de réalisation particulier de l'invention, la pièce d'adaptation est incorporée à un absorbeur de chocs.

Ainsi, son montage et son positionnement dans le canal de transmission d'efforts sont facilités. L'absorbeur de chocs peut alors comprendre une partie d'adaptation présentant toutes les caractéristiques de la pièce d'adaptation définie ci-dessus.

L'absorbeur peut en outre comporter un logement pour le capteur longitudinal.

Selon d'autres caractéristiques optionnelles de l'absorbeur :
- le logement est constitué par un compartiment de l'absorbeur, ce qui assure un montage permanent du capteur ainsi que la protection de ce dernier contre des poussières ou la corrosion.
- l'absorbeur est un absorbeur de chocs piétons.
- l'absorbeur est un absorbeur de chocs Danner.

La présente invention a également pour objet un bloc avant de véhicule automobile, caractérisé en ce qu'il comporte une pièce d'adaptation telle que décrite ci-dessus.

L'invention a également pour objet un véhicule automobile muni d'un bloc avant tel que décrit ci-dessus.

Afin de mieux faire comprendre l'invention, on va en décrire maintenant des modes de réalisation donnés à titre d'exemples non limitatifs, en référence aux dessins annexés, dans lesquels :
- la figure 1 est une section transversale d'un absorbeur de chocs en thermoplastique injecté, selon un premier mode de réalisation de l'invention,
- la figure 2 est une section transversale d'un absorbeur de chocs en mousse, selon un second mode de réalisation de l'invention.

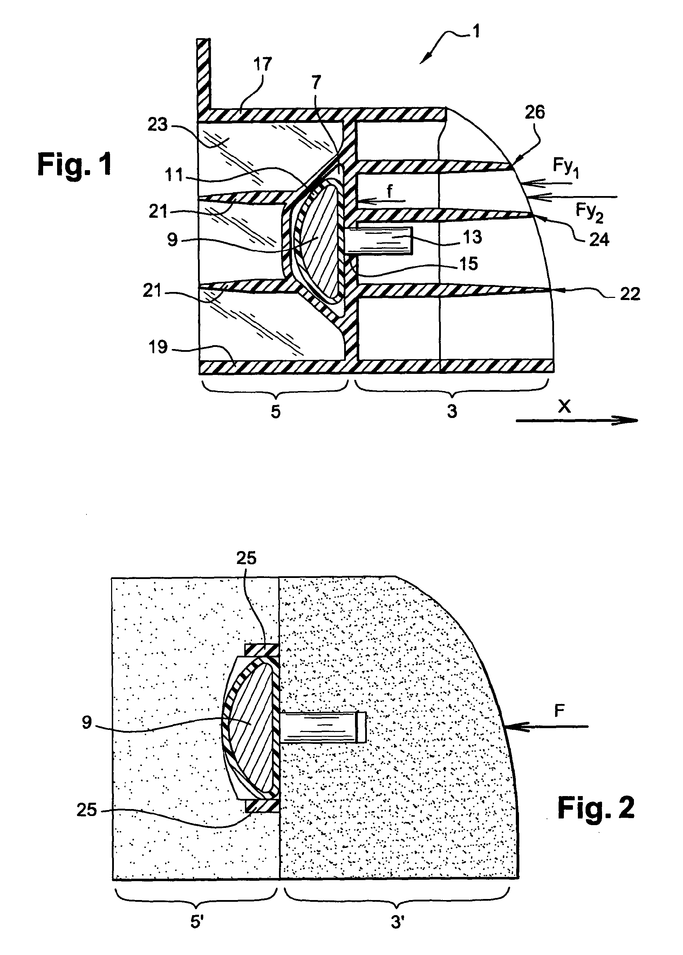

Sur la figure 1, on a représenté un absorbeur de chocs, pouvant constituer, par exemple, un absorbeur de chocs piéton ou un absorbeur de chocs Danner, en polypropylène injecté. Cet absorbeur 1 comprend une partie avant 3 et une partie arrière 5 (selon l'orientation du véhicule). Ces deux parties avant et arrière se situent de part et d'autre d'un compartiment 7 de section ovoïdale qui constitue un logement réservé pour recevoir un capteur de compression 9 sensible à une force de compression parallèle à la direction longitudinale X du véhicule, qui est également la direction selon laquelle l'absorbeur est destiné à être comprimé.

Dans l'exemple représenté, le capteur 9 est protégé par une gaine 11 qui comporte des plots 13 en saillie de sa paroi avant, s'insérant dans des orifices 15 ménagés à cet effet dans la partie avant 3 de l'absorbeur pour assurer le positionnement et le maintien en position du capteur 9 dans le logement. Un montage permanent du capteur, ainsi que la protection de ce dernier contre la corrosion ou les poussières, est donc assuré.

La partie arrière 5 de l'absorbeur est constituée par une structure en nid d'abeille comportant deux voiles horizontaux supérieur 17 et inférieur 19, et, entre ces deux voiles, deux nervures horizontales 21 interceptant des voiles verticaux 23 répartis sur toute la longueur de l'absorbeur.

Cette partie arrière 5 de l'absorbeur est relativement raide. Elle assure la protection et la stabilité du capteur. Elle est destinée à venir prendre appui contre une poutre de choc (non représentée).

Il est préférable, selon l'invention, que cette partie raide 5 de l'absorbeur se situe entre la poutre de choc et le capteur 9, de manière à protéger ce dernier en cas de choc à haute énergie.

La partie avant 3 de l'absorbeur présente une raideur irrégulière selon la direction longitudinale de l'absorbeur. Cette partie constitue une partie d'adaptation de raideur de l'absorbeur, visant à compenser les différences de raideur de l'avant du véhicule.

Cette partie 3 comprend trois nervures 22, 24, 26 s'étendant dans la direction longitudinale du véhicule (direction transversale du capteur). La forme de ces nervures 22, 24, 26, de même que leur épaisseur et leur nombre, est toutefois variable, selon la direction longitudinale du capteur.

Dans une zone peu sensible du bloc avant, les nervures 22, 24, 26 sont par exemple plus épaisses et/ou plus nombreuses que dans une zone sensible. Des évidements peuvent également être réalisés localement dans les nervures, dans le but de faire varier la raideur de la partie avant.

Ainsi, cette partie d'adaptation 3 est conçue de sorte qu'un choc en un emplacement y₁ de l'avant du véhicule, qui génère une force d'impact Fy_{1,} se traduise par une force f à l'intérieur du logement 7, c'est à dire sur le capteur 9, et de manière qu'une force Fy₂ résultant d'un impact en un emplacement y2 de l'avant du véhicule se traduise par la même force f transmise à l'intérieur du logement sur l'absorbeur.

En d'autres termes, la force f à laquelle est soumis le capteur est indépendante de l'emplacement de l'impact selon la direction longitudinale de l'absorbeur (qui est également la direction transversale du véhicule). Elle ne dépend que de la masse de l'objet impacté et de la vitesse de déplacement du véhicule.

Dans l'exemple représenté sur la figure 2, la partie arrière 5' de l'absorbeur est constituée par un bloc de mousse dont la rigidité est la même sur toute la longueur de l'absorbeur.

La partie avant 3' est également réalisée en mousse de densité variable selon la direction longitudinale du capteur. Des évidements peuvent également être réalisés localement dans la mousse.

Ainsi, la partie avant 3' de l'absorbeur présente une rigidité variable selon la direction longitudinale de l'absorbeur, de façon à réaliser l'adaptation de ce dernier à la raideur de l'avant du véhicule, comme décrit précédemment.

En outre, dans ce mode de réalisation, l'absorbeur comporte, autour du logement 7', des nervures de protection 25 qui constituent un agencement évitant qu'un effort trop important ne soit transmis au logement 7' contenant le capteur 9, même si la force d'impact F est très élevée.

Il est bien entendu que les modes de réalisation qui viennent d'être décrits ne présentent aucun caractère limitatif et qu'ils pourront recevoir toute modification désirable sans sortir pour cela du cadre de l'invention.

## Revendications

1. Pièce d'adaptation destinée à être placée sur un véhicule automobile en étant positionnée sur un canal de transmission d'efforts allant d'une peau de carrosserie à un appui rigide structurel, en passant par un capteur longitudinal (9) s'étendant sensiblement parallèment à ladite peau de carrosserie, ce capteur (9) étant sensible à des efforts transmis dans le canal de transmission d'efforts, ladite pièce d'adaptation (3, 3') étant **caractérisée en ce qu'**elle possède une raideur variable selon la direction longitudinale du capteur (9), de manière à transmettre audit capteur (9), lorsque le véhicule subit un impact, une force de compression qui tend à être indépendante de la position de l'impact par rapport à la direction longitudinale du capteur (9).

2. Pièce d'adaptation selon la revendication 1, laquelle est réalisée en une mousse de densité variable selon la direction longitudinale du capteur (9).

3. Pièce d'adaptation selon la revendication 2, laquelle comporte des évidements réalisés dans la mousse de ladite pièce (3, 3')..

4. Pièce d'adaptation selon la revendication 1, laquelle est réalisée en thermoplastique injecté, et comporte des nervures (22, 24, 26), l'épaisseur et/ou le nombre et/ou la forme des nervures (22, 24) de ladite pièce (3, 3') étant variable.

5. Pièce d'adaptation selon la revendication 4, dans laquelle des évidements sont réalisés dans les nervures (22, 24, 26) de ladite pièce (3, 3').

6. Pièce d'adaptation selon la revendication 5, selon laquelle est agencée de manière à transmettre une force limitée au capteur (9) de façon à préserver ledit capteur (9) d'un risque de détérioration en cas de choc trop important.

7. Absorbeur de chocs, **caractérisé en ce qu'**il comprend une pièce d'adaptation (3, 3') selon l'une quelconque des revendications 1 à 6.

8. Absorbeur selon la revendication 7, lequel comprend en outre un logement (7, 7') pour le capteur longitudinal (9).

9. Absorbeur selon la revendication 8, dans lequel le logement (7, 7') est constitué par un compartiment (7) de l'absorbeur (1), de sorte qu'un montage permanent du capteur (9) ainsi que la protection de ce dernier contre les poussières ou la corrosion est assuré.

10. Absorbeur selon l'une quelconque des revendications précédentes, lequel est un absorbeur de chocs piétons.

11. Absorbeur selon l'une quelconque des revendications 7 à 9, lequel est un absorbeur de chocs Danner.

12. Bloc avant de véhicule automobile **caractérisé en ce qu'**il comporte une pièce d'adaptation (3, 3') selon l'une quelconque des revendications 1 à 6.

13. Véhicule automobile **caractérisé en ce qu'**il est muni d'un bloc avant selon la revendication 10.
